# EUROPÄISCHE PATENTANMELDUNG

(11) **EP 0 840 089 A2**
(43) Veröffentlichungstag der Anmeldung: **06.05.1998**
(21) Anmeldenummer: 97118889.1
(22) Anmeldetag: 30.10.1997
(51) Int. Cl.: G01B 5/00, G01B 11/26

(54) **Vorrichtung zum Drehen einer einen Laserstrahl aussendenden Emittereinrichtung**

(30) Priorität: 31.10.1996 DE 19643955
(71) Anmelder: Prüftechnik AG, 85730 Ismaning (DE)
(72) Erfinder: Hölzl, Johannes, 85622 Feldkirchen/München (DE); Lienesch, Hans-Jürgen, 85748 Garching (DE); Konetschny, Volker, 85640 Putzbrunn (DE)

(57) **Zusammenfassung**

Eine Vorrichtung zum Drehen einer einen Laserstrahl L aussendenden Emittereinrichtung um eine Drehachse zwecks Aufspannens einer Ebene oder Kegelfläche weist einen die Emittereinrichtung 1 tragenden langgestreckten Drekörper 2 auf, der endseitig jeweils mittels eines Drehlagers 3, 4 drehbar an einer ortsfesten Halterung 5 gehalten ist, wobei das Drehlager 3, 4 aus einem kegeligen Sitz 16 sowie einem in diesen eingreifenden Lagerkörper 17 mit zur Drehachse konzentrischer, balliger Außenfläche besteht und der kegelige Sitz 16 und der Lagerkörper 17 gegeneinander vorgespannt (20) sind.

## Beschreibung

Die Erfindung bezieht sich auf eine Vorrichtung gemäß dein einleitenden Teil des Patentanspruchs 1.

Aufgabe der Erfindung ist es, eine Vorrichtung dieser Art zu schaffen, mit der auf eine Länge von 10 m eine sehr kleine maximale Laserstrahlabweichung in der Größenordnung von z.B. 10 bis 50 µm von einem vorgegebenen raumfesten Bezugsstrahl erzielbar ist, und die sich trotzdem durch eine sehr hohe Biege- und Verwindungssteifigkeit ihrer Bauteile und durch eine große Unempfindlichkeit und Widerstandsfähigkeit gegen Beanspruchungen, insbesondere Stöße, bei der Handhabung auszeichnet, so daß mit ihr insbesondere ebene Flächen wie z.B. Maschinenbetten, Maschinenmontagerahmen und dgl. mehr mit sehr hoher Genauigkeit auch unter rauhen Betriebsbedingungen vermessen werden können.

Zur hochgenauen drehbaren Lagerung von Bauteilen in Bezug aufeinander ist es bekannt, Präzisionskugellager zu verwenden oder die Teile, z.B. leicht laufende Präzisionsteile von Uhren, zwischen Spitzen zu lagern.

Mit Präzisionskugellagern ist die für die erfindugnsgemäße Vorrichtung angestrebte Genauigkeit nicht zu erreichen, und der bekannten Spitzelagerung haftet der Nachteil an, daß diese sehr stoßanfällig und nicht robust genug ist, woraus auch eine hohe Transportempfindlichkeit resultiert.

Die vorgenannte Aufgabe der Erfindung wird durch die Merkmale des Patentanspruchs 1 gelöst.

Die Erfindung beruht auf dee Erkenntnis, daß zum einen rotationssymmetrische Lagerkörper mit balliger Außenfläche, z.B. Kugeln, mit sehr großer Genauigkeit herstellbar, insbesondere schleifbar, sind und daß sich zum anderen solche Lagerkörper unter der Vorspannung in den zugehörigen kegeligen Sitz mit der Zeit mehr oder weniger einschleifen, wodurch sich zwischen diesen Teilen eine Kontaktfläche im wesentlichen in Form eines Kreisringes ausbildet, der zum einen die Unempfindlichkeit gegen Stöße vergrößert und zum anderen die Präzision der Lsgerung erhöht.

Die Unteransprüche betreffen bevorzugte Ausführungen des Gegenstandes des Patentanspruchs 1.

Die Erfindung wird nachstehend anhand der Zeichnung an Ausführungsbeispielen noch näher erläutert. In der Zeichnung zeigt:
- Fig. 1: eine erste Ausführungsform der Vorrichtung in Seitenansicht mit z. T. Weggebrochenen Teilen,
- Fig. 2: eine von der Ausführung nach Fig. 1 abweichende Gestaltung des oberen Drehlagers der Vorrichtung,
- Fig. 3: eine von der Ausführung nach Fig. 1 abweichende Gestaltung der unteren Lagerung der Vorrichtung,
- Fig. 4: eine zweite, von Fig. 1 abweichende Ausführung der Vorrichtung in Seitenansicht und z. T. im Längsschnitt,
- Fig. 5: eine Draufsicht auf die Vorrichtung nach Fig. 4 im Schnitt entlang der Schnittlinie V-V in Fig. 4,
- Fig. 6: eine dritte Ausführung der Vorrichtung in Seitenansicht sowie teilweise in Längsschnitt, und
- Fig. 7: eine perspektivische Ansicht eines bei den Ausführungformen gemäß Fig. 1 bis 6 zur Anwendung gelangenden Bandlagers.

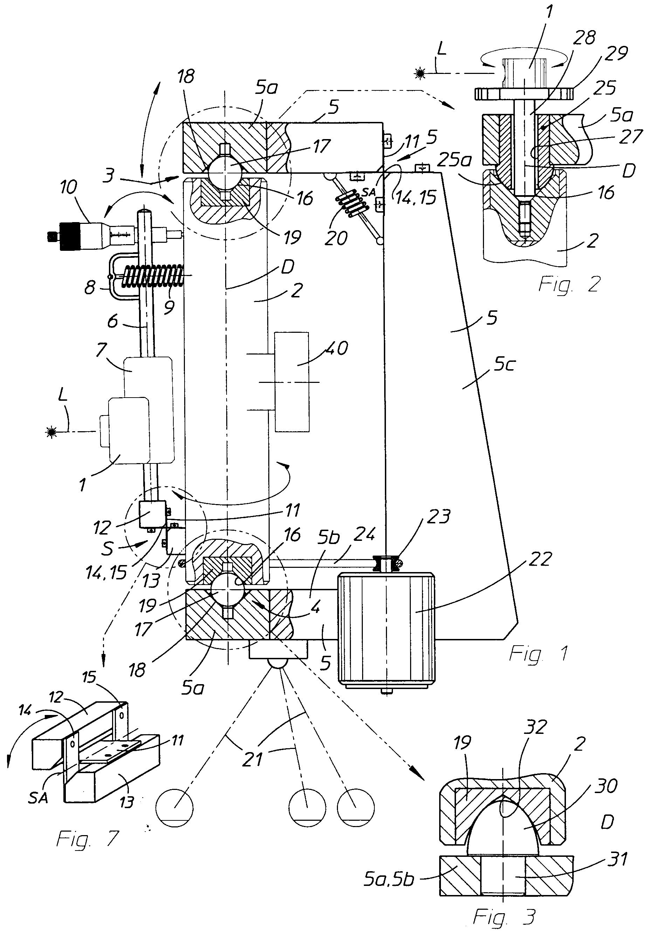

Die Vorrichtung gemäß Fig. 1 dient zum Drehen einer einen schematisch angedeuteten Laserstrahl L aussenden Emittereinrichtung 1, wobei der Laserstrahl L je nach Einstellung seines Winkels bezüglich der Drehachse D der Vorrichtung eine Ebene oder eine Kegelfläche aufspannt.

Die Emittereinrichtung ist bei der Ausführung nach Fig. 1 an einem laggestreckten massiven Drehkörper 2 in Form einer massiven starren Achse befestigt, der bei seinen Enden jeweils mittels eines Drehlagers 3 bzw. 4 an einer im Raume fixierbaren Halterung 5 um seine die Drehachse D bildende Längsachse drehbar gelagert ist. Der Drehkörper 2 hat hier vorzugsweise einen kreisförmigen Querschnitt.

Bei der Ausführung nach Fig. 1 ist der Emitter 1 höhenverstellbar an einer Halterung 6 befestigt, die aus einer sich etwa parallel zur Drehachse D erstreckenden, an ihrem unteren Ende verschwenkbar mit dem Drehkörper 2 verbundenen Gleitstange 6, einem an dieser gleitbar angebrachten, in ihrer Höhenlage feststellbaren, die Emittereinrichtung 1 tragenden Gleitstück 7, einer an einem Ende über einen Bügel 8 an der Gleitstange und am anderen Ende an dem Drehkörper befestigten Zugfeder 9 und einer Mikrometerschraube 10 besteht, die gegenüber der Gleitstange 6 senkrecht zu deren Längsachse verstellbar ist und über die die Gleitstange 6 gegen den Drehkörper 2 abgestützt ist. Durch Verstellen der Mikrometerschraube 10 bezüglich der Gleitstange 6 ist der Winkel zwischen der Längsache der Gleitstange 6 und der Drehachse D präzise einstellbar und veränderbar.

Die gelenkige Verbindung der Gleitstange 6 und des Drehkörpers 2 am unteren Ende der ersteren besorgt ein Bandlager, das ein mittleres relativ breites Band 11, das an den beiden zu verbindenden Teilen 2, 6 jeweils in der Bandebene unverdrehbar mittels Befestigungsblöcken 12 und 13 befestigt ist, und zwei beiderseits des Bandes 11, diesem benachbart angeordnete, Seitenbänder 14, 15 aufweist, die senkrecht zum mittleren Band 11 an den Befestigungsblöcken 12 und 13 fest angebracht sind. Die Bänder 11, 14 und 15 bestehen aus im wesentlichen undehnbaren, mindestens in Grenzen flexiblem Material, vorzugsweise Federmetall. Eine perspktivische Ansicht eines solchen Bandlagers zeigt Fig. 7.

Bei der Vorrichtung nach Fig. 1 sind die Drehlager 3 und 4 unmtereinander gleich ausgeführt, wobei jedes Drehlager 3 bzw. 4 aus einem zur Drehachse D konzentrischen kegeligen Sitz 16 in der jeweiligen Stirnfläche des Drehkörpers 2 und aus einem an der Halterung 5 befestigten Lagerkörper 17 mit zur Drehachse D konzentrischer, in den Sitz 16 eingreifender balliger Außenfläche besteht.

Der Lagerkörper 17 ist bei der Ausführung nach Fig. 1 jeweils eine Kugel, die in eine kegelige Vertiefung 18 in der Halterung 5 eingefügt, vorzugsweise eingeklebt, ist. Die kegeligen Sitze 16 in den Stirnflächen des Drehkörpers 2 sind jeweils an einem in den Drehkörper 2 eingelassenen und in diesem befestigten gesonderten Sitzteil 19 ausgebildet.

Bei der Ausführung nach Fig. 1 ist die Halterung 5 gabelförmig so gestaltet, daß sie den Drehkörper 2 mit ihren Gabelarmen 5a, 5b stirnseitig umspreizt, wobei sich die kegeligen Vertiefungen 18, in die die kugeligen Lagerkörper 17 eingeklebt sind, an den freien Enden der Gabelarme 5a, 5b befinden. Der Drehkörper 2 ist hier eine massive starre Achse, die zwischen den freien Enden der Gabelarme 5a, 5b der Halterung 5 um ihre Längsachse D drehbar gelagert ist.

Zur Erzielung der Vorspannung der in die kegeligen Vertiefungen 18 in den Gabelarmen 5a, 5b eingeklebten Lagerkörper 17 und der kegeligen Sitze 16 in den Stirnseiten des Drehkörpers 2 gegeneinander ist der in Fig. 1 obere Gabelarm 5a der Halterung 5 um eine die Drehachse D im Abstand im wesentlichen senkrecht kreuzende Schwenkachse SA verschwenkbar an der übrigen Halterung 5 angelenkt und gegen diese mittels einer Feder 20 zum Drehkörper 2 hin elastisch verspannt. Die gabelförmige Halterung 5 ist an einem massiven Stativ 21 befestigt, mit dein sie in einer gewünchten, mehr oder minder vertikalen Position im Raume fixierbar ist.

Eine kraftbetätigtes Drehen der Emittereinrichtung 1 erlaubt ein Motor 22, der an der gabelförmigen Halterung 5 mit zur Drehachse D im wesentlichen parallele Motorwelle 23 befestigt ist und über einen Riemen oder dgl. 24, der den Drehkörper 2 und ein Ritzel am Ende der Motorwelle 23 umschlingt, den Drehkörper 2 um seine Drehachse D über einen gewünschten Drehwinkel zu erschwenken oder auch kontinuierlich zu drehen vermag.

An dem Drehkörper 2 ist auf der von dem Emitter mit seiner Halterung abgewendeten Seite ein Gegengewicht 40 befestigt, das die Masse des Emitters 1 und seiner Halterung ausgleicht.

Die Fig. 2 zeigt eine Abwandlung der Lagerung, die anstelle des in Verbindung mit Fig. 1 beschriebenen oberen Drehlagers zur drehbaren Halterung des Drehkörpers 2 einsetzbar ist. Bei dem Drehlager nach Fig. 2 ist ein mit einem Schaft versehener, die ballige Außenfläche aufweisender Lagerkörper 25 in einer Bohrung am äußeren Ende des Gabelarmes 5a befestigt. Die dem Drehkörper 2 zugewendete ballige Außenfläche 25a des Lagerkörpers 25 ist rotationssymmetrisch zur Drehachse D des Drehkörpers 2 und greift, wie bei der Ausführung nach Fig. 1, in einen kegeligen Sitz 16 in der Stirnseite des Drehkörpers 2 ein. Der Lagerkörper 25 hat eine zur Drehachse D im wesentlichen parallele, durchgehende Bohrung 27, durch die sich mit ausreichendem Spiel für eine freie Drehung ein Bolzen 28 erstreckt, der in den Drehkörper 2 koaxial zur Drehachse D drehfest eingeschraubt ist. Am freien Ende des Bolzens 28 ist ein scheibenförmiger Träger 29 für den Emitter 1 befestigt. Der Vorteil dieser Ausführung des Drehlagers und der Emitterhalterung besteht darin, daß der Laserstrahl L um 360° gedreht werden kann, ohne dabei auf irgendwelche Teile der Vorrichtung zu fallen.

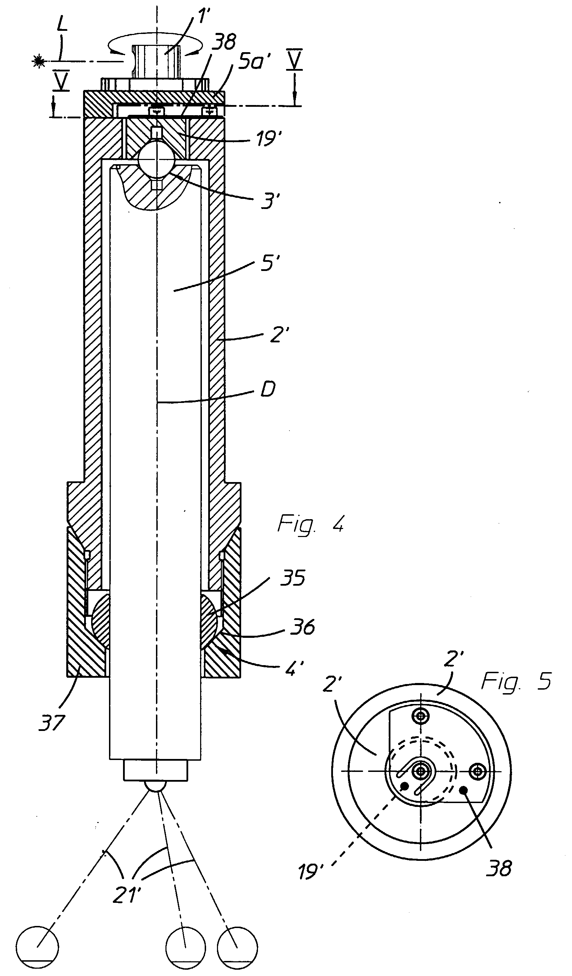

Die Fig. 3 zeigt eine weitere Abwandung des Drehlagers gegenüber dem vorstehend in Verbindung mit Fig. 1 beschriebenen. Bei diese Ausführung hat der Lagerkörper 30 ähnlich wie bei der Ausführung nach Fig. 2 einen Schaft 31 und ist mit diesem in eine Bohrung am freien Ende dee Gabelarmes 5a und/oder 5b so eingeklebt, daß seine Rotationssymmetrielinie mit der Drehachse D des Drehkörpers 2 fluchtet. Es ist deutlich zu sehen, daß hier die Außenfläche des Lagerkörpers 30 zwar ebenfalls ballig ist, aber von der Kugelform, wie sie eingangs für die Lagerkörper 17 bei Fig. 1 beschrieben worden ist, abweicht. Auch solche Formen lassen sich mit höchster Präzision herstellen.

Wie bei Fig. 1 greift auch bei der Ausführung nach Fig. 3 der Lagerkörper 30 unter Vorspannung in eine mit 32 bezeichnete Vertiefung in der Stirnseite des Drehkörpers 2 ein, doch ist diese hier nicht genau kegelförmig, sondern etwas konkav-ballig gestaltet ist.

Die Ausführung nach Fig. 3 hat den Vorteil, daß sich rasch eine Kontaktfläche zwischen der Vertiefung 32 und dem Lagerkörper 30 einschleift, die breiter ist als bei der Kugel- und Kegelform gemäß Fig. 1. Auch solche Ausführungen des Sitzes sollen unter dem Begriff "kegelförmig" verstanden werden.

Die Fig. 4 und 5 zeigen eine weitere Ausführungsform der Vorrichtung. Diese unterscheidet sich von derjenigen gemäß Fig. 1 dadurch, daß als Halterung 5' eine massive starre Achse dient und der Drehkörper 3' als diese umgebender massiver, starrer Hohlkörper ausgeführt ist, der außen auf seiner oberen Stirnseite mittels einer zu der Stirnseite im wesentlichen parallel verlaufende Halterung 5a' den Emitter 1' trägt. Bei der anderen Stirnseite des Drehkörpers 2' ragt die Halterung 5' aus dem Drehkörper 2' vor, wobei an der dortigen Stirnfläche von ihr ein massives Stativ 21' befestigt ist, mit dem die Vorrichtung gemäß Fig. 4 auf einer Unterlage stabil aufstellbar ist.

Beim oberne Ende der Halterung 5' befindet sich stirnseitig ein Drehlager 3', das im wesentlichen dem Drehlager 3 bei der Ausführung nach Fig. 1 entspricht. Unterschiedlich ist, daß der Sitzteil 19' im Drehkörper 2' in Richtung der Drehachse D gegen Federkraft beweglich und über eine Blattfeder 38 oder dgl. an dem übrigen Drehkörper 2' federnd gehalten ist.

Das andere Drehlager 4' befindet sich umfangsseitig der Halterung 2' in der Nähe des aus dem Drehkörper 3' vorragenden Endes der Halterung 5', wobei der ballige Lagerkörper 35 an der Halterung 5', diese umgebend, befestigt ist und der kegelige Sitz 36 an einein die Halterung 5' umgebenden, sich radial einwärts erstreckenden Bund 37 ausgebildet ist, der an dem Drehkörper 2' befestigt ist.

Die Ausführungsform gemäß Fig. 4 und 5 gestattet es, mit dem Laserstrahl über einen Drehwinkel von 360° eine Ebene, die sich im wesentlichen parallel zur Unterlage des Stativs 21' erstreckt, oder eine Kegelfläche, deren Mittelachse auf dieser Unterlage aufrecht steht, aufzuspannen.

Auch Lagerkörper, die die Form des Lagerkörpers 35 der Ausführung gemäß Fig. 4 haben und als außen balliger Ring gestaltet sind, können mit höchster Präzision hergestellt werden.

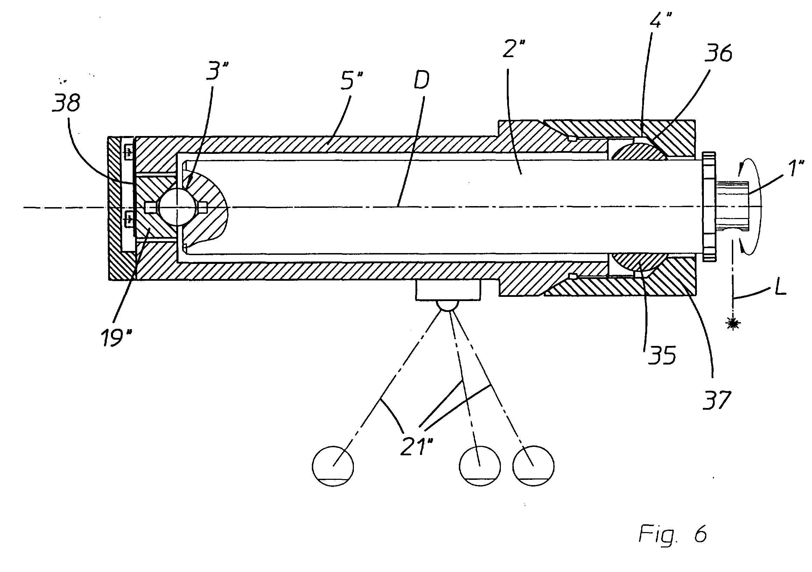

Die Fig. 6 zeigt eine dritte Ausführungsform der Vorrichtung, die sich von derjenigen gemäß Fig. 4 und 5 im wesentlichen dadurch unterscheidet, daß der als Hohlkörper gestaltete äußere Körper die Halterung 5'' bildet, während der massive innere Körper als Drehkörper 2' dient, wobei das massive Stativ 21'' am Außenumfang des Drehkörpers 5'' befestigt ist, der Emitter 1'' fest an der Stirnseite des Drehkörpers 2' angebracht ist und die Vorrichtung vom Stativ 21 so gehalten ist, daß sich die Drehachse D parallel oder etwas schräg zur Unterlage, auf der das Stativ 21'' steht, erstreckt.

Mit der Vorrichtung nach Fig. 6 können Ebenen oder kegelige Flächen aufgespannt werden, die von der Unterlage des Stativs 21 aufwärtsragen.

Auch bei den Ausführungsformen gemäß Fig. 4 und Fig. 6 kann der Emitter in Grenzen im Winkel verstellbar an dem Drehkörper 2' befestigt sein. Dies sollte vorzugsweise unter Verwendung eines Schwenklagers S der bei der Ausführung gemäß Fig. 1 verwendeten Art geschehen.

## Patentansprüche

1. Vorrichtung zum Drehen einer einen Laserstrahl (L) aussendenden Emittereinrichtung (1, 1', 1'') um eine mit dem Laserstrahl (L) einen voreinstellbaren Winkel einschließende Drehachse (D) zwecks Aufspannens einer Ebene oder Kegelfläche durch den Laserstrahl (L), **dadurch gekennzeichnet,** daß die Emittereinrichtung (1; 1'; 1'') an einem langgestreckten massiven Drehkörper (2; 2'; 2'') befestigt ist, der bei seinen Enden jeweils mittels eines Drehlagers (3,4; 3',4'; 3'',4'') an einer im Raume fixierbaren Halterung (5; 5'; 5'') um eine die Drehachse (D) bildende Längsachse von ihm drehbar gelagert ist, und daß jedes Drehlager (3,4; 3',4'; 3'',4'') aus einem zur Drehachse (D) konzentrischen kegeligen Sitz (16; 32; 36) an dem Drehkörper (2; 2'; 2'') oder an der Halterung (5; 5';5'') und aus einem an der Halterung (5; 5'; 5'') bzw. an dem Drehkörper (2; 2'; 2'') befestigten Lagerkörper (17; 25; 30; 35) mit zur Drehachse (D) konzentrischer, in den Sitz (16; 32; 36) eingreifender balliger Außenfläche besteht und bei jedem Drehlager (3,4; 3',4'; 3'',4'') der kegelige Sitz (16; 32; 36) und der Lagerkörper (17; 25; 30; 35) in Richtung der Drehachse (D) gegeneinander vorgespannt sind.

2. Vorrichtung nach Anspruch 1, **dadurch gekennzeichnet,** daß die ballige Außenfläche eine kugelige Fläche ist.

3. Vorrichtung nach Anspruch 2, **dadurch gekennzeichnet,** daß mindestens einer der beiden Lagerkörper eine Kugel (17) ist.

4. Vorrichtung nach Anspruch 3, **dadurch gekennzeichnet,** daß die Kugel (17) in eine kegelige Vertiefung (18) im Drehkörper bzw. in der Halterung eingefügt und darin befestigt ist.

5. Vorrichtung nach Anspruch 4, **dadurch gekennzeichnet**, daß die Kugel (17) in die kegelige Vertiefung (18) eingeklebt ist.

6. Vorrichtung nach einem der vorhergehenden Ansprüche, **dadurch gekennzeichnet**, daß der kegelige Sitz (16) an einem an dem Drehkörper (2; 2') bzw. an der Halterung (5'') befestigten gesonderten Sitzteil (19; 19'; 19'') ausgebildet ist.

7. Vorrichtung nach einem der vorhergehenden Ansprüche, **gekennzeichnet durch** ein an der Halterung (5; 5'; 5'') befestigbares, massives Stativ (21; 21'; 21'') zum Fixieren der Halterung in gewünschter Positiom im Raume.

8. Vorrichtung nach einem der vorhergehenden Ansprüche, **dadurch gekennzeichnet**, daß die Halterung (5) gabelförmig so gestaltet ist, daß sie den Drehkörper (2) mit ihren Gabelarmen (5a, 5b) stirnseitig umspreizt, wobei die Lagerkörper (17) an den Stirnseiten des Drehkörpers (2) und die kegeligen Sitze (16) bei den freien Enden der Gabelarme (5a, 5b) der Halterung (5) oder ungekehrt angeordnet sind (Fig. 1).

9. Vorrichtung nach Anspruch 8, **dadurch gekennzeichnet**, daß der Drehkörper (2) eine massive, starre Achse ist.

10. Vorrichtung nach Anspruch 8 oder 9, **dadurch gekennzeichnet**, daß die Lagerkörper (17) an der Halterung (5) befestigt und die kegeligen Sitze (16) an dem Drehkörper (2) angeordnet sind.

11. Vorrichtung nach einem der Ansprüche 8 bis 10, **dadurch gekennzeichnet**, daß einer (5a) der beiden Gabelarme (5a, 5b) der Halterung (5), um eine die Drehachse (D) im Abstand im wesentlichen senkrecht kreuzende Schenkachse (SA) verschwenkbar, an die übrige Halterung (5) angelenkt und gegen diese zum Drehkörper (2) hin elastisch verspannt (20) ist.

12. Vorrichtung nach Anspruch 11, **dadurch gekennzeichnet**, daß die Vorspannung eine Feder (20) besorgt, die zwischen den verschwenkbaren Gabelarm (5a) und den die Gabelarme (5a, 5b) verbindenden Teil (5c) der Halterung (5) gespannt ist.

13. Vorrichtung nach einem der Ansprüche 8 bis 12, **dadurch gekennzeichnet**, daß einer (5a) der Gabelarme (5a, 5b) der Halterung (5) mit einer sich auch durch den Lagerkörper (25) erstreckenden, sich an den kegeligen Sitz (16) anschließenden, zur Drehachse (D) koaxialen, durchgehenden Bohrung (27) versehen ist, und daß die Emittereinrichtung (1) an einem Träger (29) angebracht ist, der an einem die Bohrung (27) durchsetzenden, mit dem Drehkörper (2) starr verbundenen Bolzen (28) befestigt ist (Fig. 2).

14. Vorrichtung nach Anspruch 7 und einem der Ansprüche 8 bis 13, **dadurch gekennzeichnet**, daß das Stativ (21) an einem starren Gabelarm (5b) seitlich außen angebracht ist.

15. Vorrichtung nach einem der Ansprüche 1 bis 7, **dadurch gekennzeichnet**, daß als Halterung (5') eine massive, starre Achse dient und der Drehkörper (2') als diese umgebender massiver, starrer Hohikörper ausgeführt ist, der an einer Stirnseite mittels des einen Drehlagers (3') innen auf der benachbarten Stirnseite der Halterung (5') abgestützt ist, außen an dieser Stirnseite oder umfangsseitig den Emitter (1') trägt und aus dem die Halterung (5') bei der anderer Stirnseite mit einem Ende vorragt. (Fig. 4)

16. Vorrichtung nach Anspruch 15, **dadurch gekennzeichnet**, daß das andere Drehlager (4') sich umfangsseitig der Halterung (5') in der Nähe des aus dem Drehkörper (2') vorragenden Endes der Halterung (5') befindet, wobei der ballige Lagerkörper (35) dieses Drehlagers (4') umfangsseitig an der Halterung (5), diese als balliger Ring umgebend, befestigt ist und der zugehörige kegelige Sitz (36) an einem die Halterung (5') umgebenden, sich radial einwärts erstreckenden Bund (37) des Drehkörpers (2') ausgebildet ist.

17. Vorrichtung nach Anspruch 15 oder 16, **dadurch gekennzeichnet**, daß der Drehkörper (2') in der von dem herausragenden Ende der Halterung (5') abgewendeten Stirnwand einen im wesentlichen zentral angeordneten, gegen Federkraft (38) in Grenzen axial verlagerbaren Sitzteil (19') aufweist, der über eine Blattfeder (38) od. dgl. an dem übrigen Teil des Drehkörpers (2') gehalten ist.

18. Vorrichtung nach Anspruch 7 und einem der Ansprüche 15 bis 17, **dadurch gekennzeichnet**, daß das Stativ (21') stirnseitig an dem aus dem Drehkörper (2') herausragenden Ende der Halterung (5') angebracht ist.

19. Vorrichtung nach einem der Ansprüche 1 bis 7, **dadurch gekennzeichnet**, daß als Drehkörper (2'') eine massive, starre Achse dient und die Halterung (5'') als die starre Achse umgebender, massiver Hohlkörper ausgeführt ist, aus dem der Drehkörper (2'') mit einem seiner Enden vorragt und dort stirnseitig den Emitter (1'') trägt. (Fig.6)

20. Vorrichtung nach Anspruch 19, **dadurch gekennzeichnet**, daß das eine Drehlager (3'') stirnseitig bei dem anderen Ende des Drekörpers (2'') angeordnet ist und das andere Drehlager (4'') sich umfangsseitig des Drehkörpers (2'') in der Nähe des aus der Halterung (5'') vorragenden Endes des Drehkörpers (2'') befindet, wobei der ballige Lagerkörper (35) umfangsseitig an dem Drehkörper (2''), diesen als außen balliger Ring umgebend, befestigt ist und der kegelige Sitz (36) an einem den Drehkörper (2'') umgebenden, sich radial einwärts erstreckenden Bund (37) der Halterung (5'') ausgebildet ist.

21. Vorrichtung nach Anspruch 7 und Anspruch 19 oder 20, **dadurch gekennzeichnet**, daß das Stativ (21'') seitlich außen an dem der Halterung (5'') angebracht ist.

22. Vorrichtung nach einem der vorhergehenden Ansprüche, **dadurch gekennzeichnet**, daß die Emittereinrichtung (1; 1'; 1'') im Winkel verstellbar an dem Drehkörper (2; 2'; 2'') angebracht ist.

23. Vorrichtung nach einem der vorhergehenden Ansprüche, **dadurch gekennzeichnet**, daß zur gelenkigen Verbindung von Teilen der Vorrichtung Bandlager verwendet sind, die jeweils ein breites mittleres Band (11), das an den beiden zu verbindenden Teilen (12, 13; 5a, 5c) jeweils in der Bandebene unverdrehbar befestigt ist, und zwei dazu beiderseits benachbart angeordnete Seitenbänder (14, 15), die in zur Ebene des mittleren Bandes (11) im wesentlichen senkrechter Ebene an den beiden zu verbindenden Teilen (12,13; 5a, 5c) befestigt sind, aufweisen, wobei alle Bänder (11, 14, 15) aus im wesentlichen undehnbarem, mindestens in Grenzen flexiblem Material bestehen.

24. Vorrichtung nach Anspruch 23, **dadurch gekennzeichnet**, daß das Material der Bänder ein Federmetall ist.
